(19) Europäisches Patentamt
European Patent Office
Office européen des brevets

(11) **EP 2 575 247 B1**

(12) **EUROPEAN PATENT SPECIFICATION**

(45) Date of publication and mention
of the grant of the patent:
**19.04.2017 Bulletin 2017/16**

(51) Int Cl.:
*H02M 3/335* *(2006.01)*    *H02M 7/5387* *(2007.01)*
*H02M 1/00* *(2007.01)*

(21) Application number: **12185663.7**

(22) Date of filing: **24.09.2012**

(54) **Method for DC-DC conversion with phase-shift modulation, and corresponding conversion apparatus**

Verfahren zur Gleichstromumwandlung mit Phasenshift-Modulation und entsprechende Umwandlungsvorrichtung

Procédé pour la conversion CC-CC à modulation par déplacement de phase et appareil de conversion correspondant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2011 IT TO20110863**

(43) Date of publication of application:
**03.04.2013 Bulletin 2013/14**

(73) Proprietor: **Magneti Marelli S.p.A.**
**20011 Corbetta (MI) (IT)**

(72) Inventor: **Fantino, Davide**
**I-20011 Corbetta (Milano) (IT)**

(74) Representative: **Notaro, Giancarlo**
**Buzzi, Notaro & Antonielli d'Oulx**
**Via Maria Vittoria 18**
**10123 Torino (IT)**

(56) References cited:
**US-A1- 2010 020 569**    **US-B2- 6 937 486**

- **MARIO CACCIATO ET AL: "A new resonant active clamping technique for bi-directional converters in HEVs", ENERGY CONVERSION CONGRESS AND EXPOSITION (ECCE), 2010 IEEE, IEEE, PISCATAWAY, NJ, USA, 12 September 2010 (2010-09-12), pages 1436-1441, XP031787460, ISBN: 978-1-4244-5286-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to DC-DC conversion techniques with phase-shift modulation and zero-voltage switching, which envisages supplying an input voltage to an H-bridge of switches for transferring an input voltage to a transformer, said transformer being connected in series to a resonant inductance via a primary winding of its own, said resonant inductance being connected between the switches of a first leg of the bridge, whereas said primary winding is connected between the switches of a second leg of the bridge, the switches of said first leg or the switches of said second leg of the bridge being turned on and turned off according to an alternating sequence, said sequence comprising a dead time during which both of the switches of said first leg or both of the switches of said second leg of the bridge are turned off.

A DC-DC converter is a circuit that converts a d.c. source from one voltage level or value to another. Said type of converters constitutes a class of power converters. DC-DC converters are important in mobile electronic instruments, such as cellphones and laptops, which are battery-supplied. Said electronic instruments frequently contain various sub-circuits, in which each one requires a level of voltage different from the one supplied by the battery (typically higher or lower than the battery voltage, and sometimes even a negative voltage). Furthermore, the battery voltage decreases as the power is drawn off. DC-DC converters offer a way of generating different controlled voltage levels starting from a battery with variable voltage, thus saving space and avoiding use of a lot of batteries for supplying energy to the various parts of the instrument.

Furthermore, in the automotive sector, for example, for electric cars or hybrid cars, there are frequently necessary converter apparatuses; for example, in hybrid vehicles two electrical networks are usually present, namely, an electrical network of a traditional type for loads such as lights or the electronic control unit for controlling the thermal engine, and a high-voltage electrical network for the electric engine, which can operate, for example, at voltages of around 600 V. In this context, systems are required for converting energy that will set the two electrical networks in communication, in particular for transferring energy from the high-voltage network supplied by a specific battery, for example, a lithium-ion battery, to the conventional lower-voltage network.

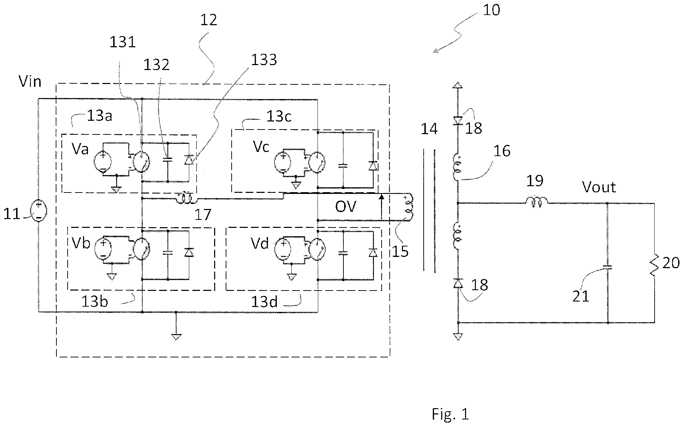

In this connection, Figure 1 illustrates a DC-DC converter with phase-shift modulation, or phase modulation, of a ZVT (Zero Voltage Transition) type, i.e., with zero-voltage switching of the switches, according to the known art.

Said converter, designated as a whole by the reference number 10, comprises a generator 11 of input voltage Vin that supplies said input voltage Vin to an H-bridge 12, which is of the full-bridge type and comprises four switch modules 13a, 13b, 13c and 13d.

A first circuit, i.e., a first leg of the bridge 12, comprises the first switch module 13a and the second switch module 13b set in series to one another and set in parallel to the generator 11, whereas a second circuit, or second leg of the bridge 12, comprises, in a similar arrangement, the third switch module 13c and the fourth switch module 13d. Consequently, within the H-bridge structure of the bridge 12, the first switch module 13a and the fourth switch module 13d identify a first diagonal of the bridge 12, whilst the second switch module 13b and the third switch module 13c identify a second diagonal of the bridge 12. A transformer 14, which receives the modulated input voltage Vin through the bridge 12, comprises a primary winding 15 and a secondary winding 16. The transformer 14 is connected in series to a resonant inductance 17 via the primary winding 15, to provide for zero-voltage switching of each of the switch modules 13 of the bridge 12. The resonant inductance 17 is connected to the node in common between the switch modules 13a and 13b of the first leg of the bridge 12, whereas the primary winding 15 is connected to the node between the switches 13c and 13d.

Each of the switch modules 13a, 13b, 13c, 13d comprises a respective MOSFET 131, which includes an internal capacitance 132 and a body diode 133 between the drain and the source. In the body diode 133 direct biasing is from source to drain. The gate electrode of the MOSFET 132 is a control electrode to which a driving signal, in particular a voltage, is applied. To the switch modules 13a, 13b, 13c, 13d respective driving signals Va, Vb, Vc, Vd are applied by a control circuit (not illustrated in Figure 1).

The secondary winding 16 of the transformer 14 is, for example, of the type with two half-windings and centre tap, and the terminals of said secondary winding 16 are connected to cathodes of respective rectifier diodes 18, the anodes of which are connected to ground. An inductor 19 is connected between the centre tap and an output terminal Vout, to which a charge resistance 20 and a smoothing capacitor 21 are connected. The diodes can be replaced by MOSFETs for synchronous rectification.

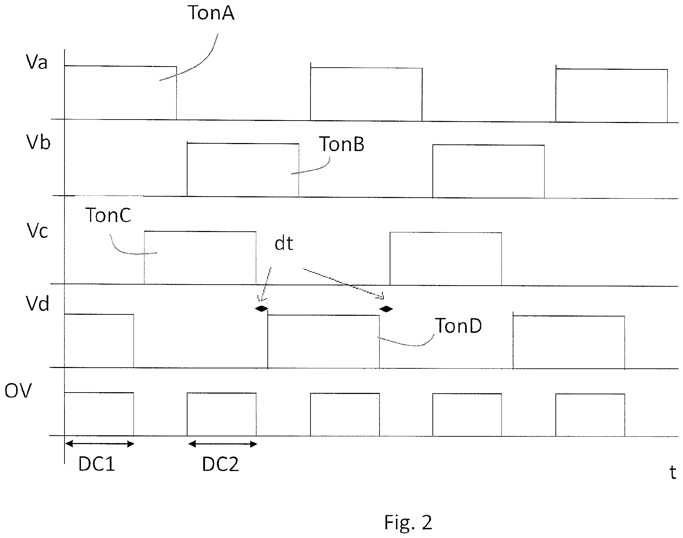

In the DC-DC converter with ZVT phase-shift modulation 10, it is envisaged that, as illustrated in the diagram of Figure 2 representing the plots as a function of time t of the driving signals Va, Vb, Vc, Vd, the first switch module 13a and the second switch module 13b are turned on and turned off in an alternating way. The corresponding alternating sequence has a 50% duty cycle, i.e., the on times have a duration equal to the off times, whilst a dead time dt is inserted, during which both of the switches of one and the same leg of the bridge 12 are turned off. Indicated specifically in Figure 2 are the on times TonA, TonB, TonC and TonD of the respective driving signals Va, Vb, Vc, Vd. Likewise, the switch modules 13c and 13d are turned on and turned off in an alternating way with a 50% duty cycle. The switching frequencies of the driving signals Va, Vb, Vc, Vd are constant. When the switch modules 13a and 13d are turned on, i.e., the switch modules on the first diagonal are turned on, the switch modules 13b and 13c on the second diagonal are turned off. At this point, the input voltage Vin is applied to a series circuit constituted by the inductor 17 and by the primary 15 in such a way that the terminal of the inductor 17 connected to the first leg of the bridge 12 is positive. Instead, when the switch modules 13b and 13c are turned on, the switch modules 13a and 13d are turned off. At this point the input voltage Vin causes the terminal of the inductor 17 connected to the first leg to be negative. When the switch modules 13a, 13c are turned on and the switch modules 13b and 13d are turned off, as likewise when, instead, the switch modules 13b and 13d are turned on and the switch modules 13a, 13c are turned off, both of the terminals of the series circuit to which the inductor 17 belongs are at the same potential.

The inductor 17 is introduced in order to carry out ZVT switching of each of the switch modules 13a, 13b, 13c, 13d, using the resonance with the internal capacitance of each MOSFET. The MOSFET 131 is turned on when the voltage between drain and source of the MOSFET is approximately zero. The resonating inductor 17 is hence sized on the basis of the magnitude of the capacitance 132.

As is clear, the converter 10 of the full-bridge type with ZVT phase-shift control requires a precise control of the four driving signals Va, Vb, Vc, Vd that are usually applied by dedicated controllers.

It is clear that the duty cycle of the signal OV applied to the transformer 14 depends upon the superposition of the driving signals of the pair Va and Vd and of the pair Vc and Vb.

A dead time dt is left that is sufficiently long to enable the zero-voltage transitions.

Usually the dead time of the high-to-low transition, i.e., the dead time between turning-off of the high-side switch, connected to the power supply, and turning-on of the low-side switch, connected to ground, in what follows designated by dt1, and that of the low-to-high transition, i.e., the dead time between turning-off of the low-side switch and turning-on of the high-side switch, dt2, is the same, as likewise identical are the duty cycle DC1 and the duty cycle DC2 of the signal OV applied to the transformer 14 associated to the two superpositions, respectively, of the driving signals on the diagonals of the bridge 12. In fact, Figure 2 also represents the plot of said signal OV, showing the intervals of simultaneous turning-on of the switches 13a, 13d and, respectively, 13b, 13c. Designated by DC1 is the duty cycle associated to simultaneous turning-on of the diagonal 13a-13d, whilst designated by DC2 is the duty cycle associated to simultaneous turning-on of the diagonal 13b-13c.

On account of disturbance on the power-supply bus, however, the value of volt-seconds applied on the transformer 14 by a diagonal of the bridge 12, for example, the diagonal identified by the switches 13a and 13d, can differ from the value associated to the other diagonal, for example, 13b-13c. If this situation lasts for a sufficiently high number of cycles, there exists the risk of sending into saturation the transformer 14, in the absence of a capacitor set in series to said transformer 14. The same effect can be caused by possible lack of symmetry in the driving stage of the switches of the bridge, which causes different delays on each switch.

From the U.S. patent No.US-A-6, 937, 486 it is known to make the regulation to prevent saturation by reading the current of the bridge. Said document envisages, however, changing the duration of some of the pulses; in particular, not all the on times, of the switches are the same, this determining the need to use circuits for driving the MOSFETs that function as switches of the bridge which have to be designed specifically for the required timing. Document US 2010/0020569 A1 discloses a method for DC-DC conversion with zero-voltage switching, which supplies an input voltage to a bridge of switches for transferring the input voltage to a transformer which is connected in series to a resonant inductance via a primary winding of its own, the resonant inductance being connected between the switches of the bridge, whilst said primary winding is connected between capacitances of a second leg of the bridge, the switches of the bridge being turned on and turned off according to an alternating sequence comprising a dead time, wherein the dead-time value is corrected as a function of the measured current through the transformer.

The publication of Cacciato, M., Consoli, A., Crisafulli, V., Vitale, G., Abbate, N. "A new resonant active clamping technique for bi-directional converters in HEVs", Energy Conversion Congress and Exposition (ECCE), 2010 IEEE, 12-16 Sept. 2010, pages 1436-1441 discloses clamping techniques for bidirectional converters.

The object of the present invention is to provide a solution for a method of DC-DC conversion for a ZVT phase-shift DC-DC converter apparatus that will overcome the drawbacks of the known art, and, in particular, will enable an operation as symmetrical as possible of the diagonals of the bridge of the converter, with respect to problems of disturbance on the power-supply bus and with respect to lack of symmetry of the driving stage, using in particular simple driving circuits.

According to the present invention, the above object is achieved thanks to a conversion method, as well as to a corresponding converter apparatus, that present the characteristics recalled specifically in the ensuing claims.

The invention will be described with reference to the annexed drawings, which are provided purely by way of non-limiting example and in which:

-    Figure 1 and Figure 2 have already been illustrated previously;
-    Figure 3 is a diagram representing driving signals according to the method of the invention;
-    Figure 4 is a diagram representing driving signals according to the method of the invention in two operating conditions;

- Figure 5 is a principle diagram of a switch module that can be used by a converter apparatus that implements the method according to the invention;
- Figure 6 is a principle block diagram of a control mechanism operated by the method according to the invention; and
- Figure 7 is a block diagram of a converter apparatus that implements the method according to the invention.

In brief, the method proposed envisages making a measurement of the direct current that is present in the transformer of the converter apparatus as a consequence of the different values of volt-seconds on the two diagonals of the bridge determined by the plot of the currents in the bridge resulting from disturbance, lack of symmetry, or other causes, and, on the basis of the measured value of said d.c. current in the transformer, changing the duty cycle associated to a diagonal of the bridge with respect to the one associated to the other diagonal so as to bring the value of said direct current back to zero and consequently render the values of volt-seconds applied by the two diagonals of the bridge 12 on average symmetrical.

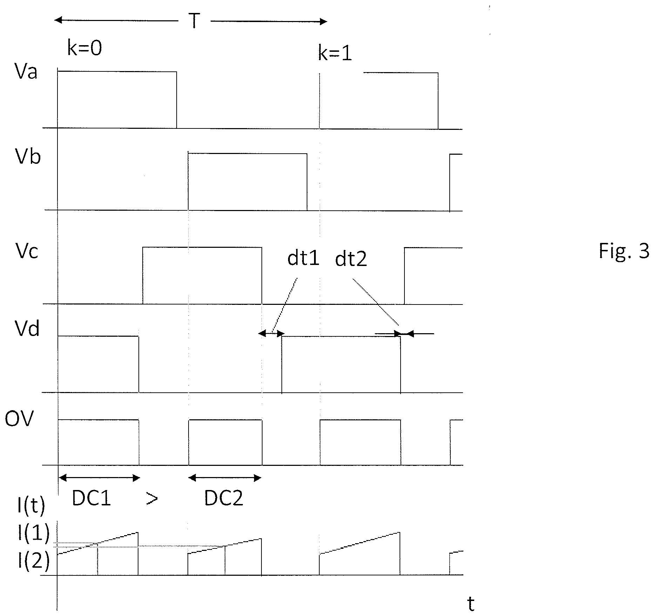

In particular, for this purpose it is envisaged to maintain the on times Ton of the driving signals Va and Vb and of the driving signals Vc and Vd equal. The change of the effective duty cycle is obtained by acting on the dead times associated to a leg of the bridge 12 that governs the transformer 14, for example, the driving signals Va and Vb of a leg of the bridge 12, rendering them different in the two transitions from high-low to low-high, as described in greater detail in what follows with reference to Figure 3.

Consequently, Figure 3 illustrates time plots representing the driving signals Va, Vb, Vc, Vd used by the method according to the invention in association with a converter apparatus substantially similar to the one represented in Figure 1.

Identified by k in Figure 3 is the discrete instant, the value of which is incremented after each complete switching period T of the H-bridge 12 (sequence of the diagonal 13a and 13d plus sequence of the diagonal 13b and 13c).

The calculation of the dead times dt1, dt2 occurs according to the steps described in what follows.

At the discrete instant k = 0, it is envisaged to set the first dead time dt1 with a value equal to that of the second dead time dt2, and equal to the dead-time value dt without modulation, i.e., symmetrical, as illustrated in Figure 2. The first dead time dt1, for example, corresponds to the transition from the high-side transistor of the first leg of the bridge 12 turned on to the low-side transistor turned on, whilst the second dead time d2 corresponds to the transition from low to high.

Next, it is envisaged to calculate the values of the first dead time dt1 and of the second dead time dt2 starting from a measured current value I(t), which corresponds to the current that circulates in the transformer 14.

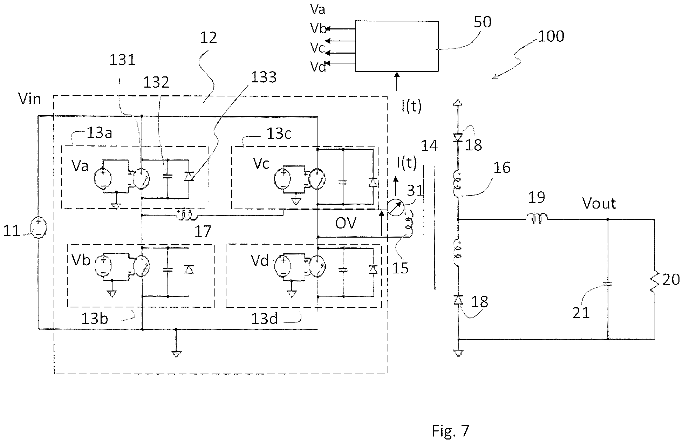

Represented in this connection in Figure 7 is a DC-DC converter apparatus with phase-shift modulation 100, suited to implementing the method described herein. Said converter apparatus 100 has a circuit arrangement substantially corresponding to that of the converter 10 illustrated in Figure 1, with respect to which it comprises in addition a current sensor 31 that measures the current I(t) in the transformer 14. Furthermore, represented explicitly in Figure 7 is a controller module 50, configured for generating the driving signals Va, Vb, Vc, Vd in accordance with the method according to the invention, on the basis of the measurement of the current I(t) supplied by the sensor 31.

The measurement of the current I(t) is hence made by the sensor 31, which, according to the preferred embodiment of Figure 7, is set in series to the transformer 14. Alternatively, said sensor 31 can be set in series to the H-bridge 12, upstream thereof. Said sensor 31 sees a current different from zero only during the on transition of the signal OV applied to the transformer 14.

The measurement of the current I(t) by the sensor 31 is made preferably by sampling the current value half-way through the on time of the signal OV applied to the transformer 14 as indicated in Figure 3. Indicated by I(1) is the current value measured in the step of closing of the MOSFETs 13a and 13d of the first diagonal of the bridge 12 and indicated by I(2) is the current value measured in the step of closing of the MOSFETs 13b and 13c of the second diagonal of the bridge 12. The difference between the measurements I(2) and I(1) yields a value of direct current I(k) that circulates in the transformer 14 at the discrete instant k.

The measurement of the current I(t), as value of direct current I(k) or other form of measurement of the current in the transformer 14, is supplied to the controller module 50, which is configured to derive a correction value CD of the dead time to be applied by modifying the timing of the driving signals Va, Vb, Vc, Vd that said controller 50 sends to the H-bridge 12.

The controller module 50 can make said calculation of the correction value CD from the current I(t) measured via a sub-module or function of its own that operates as a simple discrete-time integrator. The integrator sub-module, as will be clear to the person skilled in the sector, may also be separate from the controller module and may be a logic module or even an analog module.

Correction of the dead time CD is thus in general calculated by measuring the mean current in the transformer 14, i.e., as time integral of the current value divided by a constant, namely,

$$CD = \frac{1}{c} \int I(t)dt$$

(1)

where C is a constant that determines the correction speed.

In the most general form, the current sensor sends a measurement of the current I(t), which can envisage sampling of the current also with a number of values higher than the two values of Figure 3 and the current is integrated over the time interval k.

In a preferred embodiment, the procedure is carried out with the simple integrator and with sampling of the current I(t) by the current sensor 31 half-way through the on times of the signal OV applied to the transformer 14, as indicated in Figure 3. The formula for calculation of the correction CD is in this way particularly simple to implement

$$CD(k) = \frac{1}{c} * [I(2) - I(1)] * T - CD(k-1)$$

(2)

where k - 1 and k are two successive discrete instants separated by a switching period T.

Once the correction value CD has been calculated in the controller 50, it is then envisaged to correct, in particular in said controller module 50, the first dead-time value dt1 and the second dead-time value dt2 in opposite ways via the correction value CD:

```
dt1 = dt + CD
dt2 = dt - CD                                    (3)
```

The correction value CD is preferably calculated iteratively at each step or successive discrete instant k.

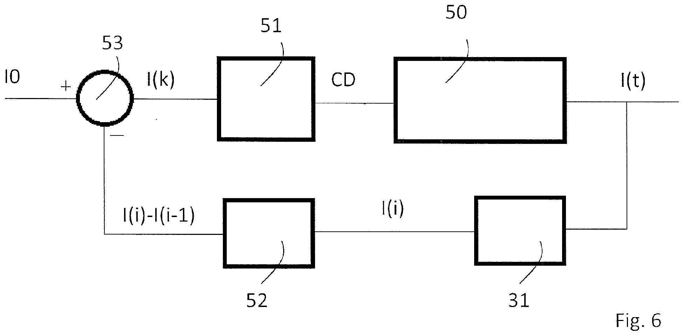

The above iterative procedure can be alternatively substituted, as illustrated in greater detail in what follows with reference to Figure 6, by a feedback-loop control to bring the current I(t) back to a set-point value 10 that corresponds to the zero value.

Eq. (2) corresponds to Eq. (1) if it is referred to continuous time. Eq. (1) also identifies the behaviour of a possible capacitor set in series to the transformer, which would change the voltage on the transformer 14 applied by the two diagonals of the bridge 12. Use of Eq. (1) for calculating the correction corresponds, that is, to emulating the behaviour of a capacitor set in series to the transformer 14, use of which to solve the problem of saturation would give rise to problems of encumbrance and costs. Hence, in particular, it is envisaged to size said constant value C as the value of a hypothetical capacitor set in series to the transformer 14 of a value suitable for compensating the disturbance.

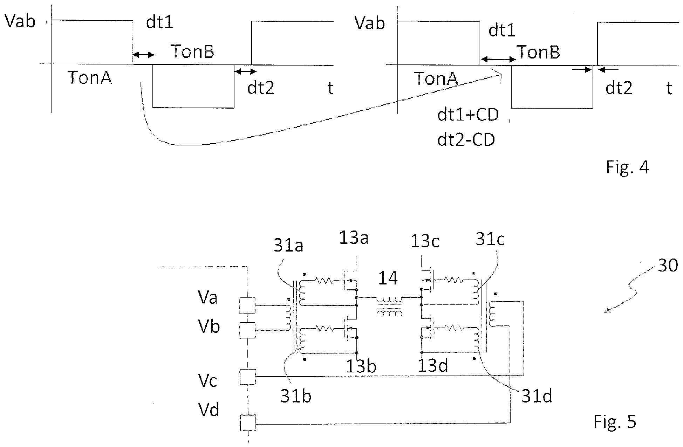

Figures 4a and 4b illustrate a global driving signal Vab, which is the superposition, with the corresponding sign, of the driving signals Va and Vb applied to the switch modules 13a and 13b of the first leg of the H-bridge 12. Since the two corresponding MOSFETs are of a complementary type, for turning on the MOSFET of the module 13b a negative voltage is in fact required. Figure 4a illustrates the global driving signal Vab, distinguished by a first dead-time value dt1 corresponding to the transition from high to low and a second dead-time value dt2 corresponding to the transition from low to high. Figure 4b illustrates the global driving signal Vab at a subsequent instant after, for example, a correction CD has been applied according to the Eqs. (1) or (2) and (3). As may be noted, the first dead time dt1 is increased, whilst the second dead time dt2 decreases, in practice determining in the signal OV that represents the voltage on the transformer 14 due to the action of the first diagonal of the bridge 12 and then due to the action of the second diagonal of the bridge 12, a first duty cycle DC1 longer than the second duty cycle DC. This enables re-balancing of a difference of value of volt-seconds, due to other causes, which sees a higher value of volt-seconds, i.e., of magnetic flux of the transformer, linked to the action of the second diagonal as compared to the value of volt-seconds in the transformer 14 linked to the action of the first diagonal of the bridge 12.

As illustrated in Figure 3, the on times of the switch modules 13a, 13b, 13c, 13d are not varied for controlling the current value I(t) in the transformer 14, and the value of the first and second dead times dt1 and dt2 is, instead, controlled. The fact that the on times are not varied enables use of standard circuits for generating the driving signals Va, Vb, Vc, Vd.

In particular, Figure 5 illustrates, for example, as embodiment of the control circuit that generates the driving signals Va, Vb, Vc, Vd, a driver-transformer gate 30, which uses couplings via transformers 31a, 31b, 31c, 31d for generating the driving signals Va, Vb, Vc, Vd. In Figure 5, the switch modules 31 are illustrated connected for simplicity to the transformer 14 alone, even though in general the converter apparatus according to the invention also comprises the resonance inductor 17 connected between the two legs of the bridge 12, as illustrated in Figure 2.

Figure 6 shows a block diagram of a control scheme that envisages associating the controller module 50 to a PID (Proportional-Integral-Derivative) network with feedback loop. Designated by 51 is a PID controller, which supplies the correction value CD to the controller module 50 of the H-bridge 12, which in turn controls the timing and amplitudes of the driving signals Va, Vb, Vc, Vd for determining a given current I(t) in the transformer 14. Preferably, said controller module 50 applies said driving signals Va, Vb, Vc, Vd via the driver-transformer gate 30 of Figure 5. Designated by 31 is the current sensor 31 set downstream of the H-bridge 12 that supplies the current values I(1) and I(2), i.e., in general current values I(i) at the instant i and I(i-1) at the previous instant i-1, of which the difference I(i-1)-I(i) is made in a difference module 52. Said difference I(i-1)-I(i) is supplied to the subtraction input of a subtraction module 53 for calculating a difference with respect to the set-point value I0, which, according to the method, preferably has a zero value in such a way that the feedback loop will operate to send the current in the transformer 14 to zero. The output of the subtraction module 53 corresponds to the direct current I(k) at the discrete instant k, and constitutes the input of the PID controller 51. The diagram of Figure 6 hence basically represents the controller module 50 that drives the H-bridge 12, associated to a PID control with feedback loop, constituted by the blocks 52, 53, which makes the correction CD of the dead-time value as a function of the measurement of the current I(t) made by the current sensor 31 to bring said current to a set-point value 10 equal to zero.

Hence, from the foregoing description, the advantages of the method and apparatus according to the invention emerge clearly.

The method according to the invention advantageously enables shifting of one of the driving signals, for example, Vb, to the right or to the left, i.e., advancing or retarding, so as to generate two different duty cycles, the first longer than the second, hence determining different dead times. In this way, advantageously the on time of all four driving signals of the bridge remains constant, this enabling driving of the switches, for example, via driver-transformer-gate devices with symmetrical driving, guaranteeing galvanic insulation.

Furthermore, advantageously, a measurement of the average current that emulates the behaviour of a capacitor set in series to the transformer can be adopted, with saving in terms of costs and encumbrance with respect to the use of the real component.

Of course, without prejudice to the principle of the invention, the details of construction and the embodiments may vary widely with respect to what has been described and illustrated herein purely by way of example, without thereby departing from the scope of the present invention.

The measurement of the current that circulates in the transformer used by the method described herein can be made in a different way; for example, the current value supplied by the input generator can be measured.

The resonant inductance can be derived from the parasitic inductance of the transformer or of the connections.

The transformer of the converter apparatus can have a single secondary winding, that is, without a centre tap and half-windings.

The controller module can be obtained using one or more microprocessors or microcontrollers, or other devices suited to carrying out processing of the signals required by the method according to the invention, carrying out said processing also in a distributed way. Said controller module can, for example, be obtained from the processing modules of an electronic control unit for an engine or some other electronic control unit of a motor vehicle.

**Claims**

1. A method for DC-DC conversion with phase-shift modulation and zero-voltage switching, which envisages supplying an input voltage (Vin) to an H-bridge of switches (12) for transferring said input voltage (Vin) to a transformer (14), said transformer (14) being connected in series to a resonant inductance (17) via a primary winding (15) of its own, said resonant inductance (17) being connected between the switches (13a and 13b) of a first leg of the bridge (12), whilst said primary winding (15) is connected between the switches (13c, 13d) of a second leg of the bridge, the switches (13a, 13b) of said first leg or the switches (13c, 13d) of said second leg of the bridge (12) being turned on and turned off according to an alternating sequence, said sequence comprising a dead time (dt; dt1, dt2), during which both of the switches (13a, 13b) of said first leg or the switches (13c, 13d) of said second leg of the bridge (12) are turned off;

    said method comprising that:

    a measurement is made of the current (i(t)) that flows in the transformer (14),
    a correction (CD) of the dead-time value (dt1; dt2) is calculated as a function of said measurement of the current (i(t)) suitable for compensating a difference of magnetic flux in the transformer (14) generated by a first diagonal (13a, 13d) of the bridge (12) with respect to a second diagonal (13b, 13c) of the bridge (12),
    said correction (CD) of the dead-time value (dt1; dt2) being applied to make the dead times (dt1) associated to a leg of the bridge (12) different in the two transitions from high to low (dt1) and from low to high (dt2).

2. The conversion method according to Claim 1, **characterized in that**:

said operation of calculating a correction (CD) comprises calculating said correction (CD) as time integral of the measurement of the current (i(t)) that flows in the transformer (14), divided by a constant value (C) suitable for determining the correction speed.

3. The conversion method according to Claim 2, **characterized in that**:

said constant value (C) is sized on the basis of the value of a capacitor that, set in series to the transformer (14), is designed to compensate said difference of magnetic flux in the transformer (14) generated by a first diagonal (13a, 13d) of the bridge (12) with respect to a second diagonal (13b, 13c) of the bridge (12).

4. The conversion method according to any one of the preceding claims, **characterized in that**:

said operation of calculating a correction (CD) comprises applying said correction (CD) to a dead time of the transition from high to low (dt1) and to a dead time of the transition from low to high (dt2) of driving signals (Vab) applied to a leg (Va, Vb) of the bridge (12).

5. The conversion method according to Claim 4, **characterized in that** said operation of applying said correction (CD) comprises adding the correction (CD) to said dead time of the transition from high to low (dt1) and subtracting said correction from a dead time of the transition from low to high (dt2).

6. The conversion method according to Claim 4, **characterized in that** it comprises repeating iteratively, in particular at each discrete instant (k) incremented after each complete switching period (T) of the H-bridge (12), said steps of making a measurement of the current (i(t)) that flows in the transformer (14) and calculating a correction (CD) of the dead-time value (dt1; dt2) as a function of said measurement of the current (I(t)).

7. A DC-DC converter apparatus with phase-shift modulation and zero-voltage switching, comprising an H-bridge (12) of switches (13) for transferring an input voltage (Vin) to a transformer (14), said transformer (14) being connected in series to a resonant inductance (17) via a primary winding (15) of its own, said resonant inductance (17) being connected between the switches (13a and 13b) of a first leg of the bridge (12), whilst said primary winding (15) is connected between the switches (13c, 13d) of a second leg of the bridge (12), said apparatus comprising a controller module (50; 50, 51, 52, 53) configured to implement the operations of the conversion method according to one or more of Claims 1 to 6.

8. The apparatus according to Claim 7, **characterized in that** it comprises a module for measuring the current (31) in the transformer (14).

9. The apparatus according to Claim 8, **characterized in that** said module for measuring the current comprises a current sensor (31), in particular set in series to the H-bridge (12) or to the transformer (14).

10. The apparatus according to Claim 8 or Claim 9, **characterized in that** said current sensor (31) is configured for making the measurement of the current (I(t)) by sampling current values (I(1), I(2)) half-way through the period of turning-on of the signal (OV) applied to the transformer (14).

11. The apparatus according to Claim 8 or Claim 9 or Claim 10, **characterized in that** said controller module (50; 50, 51, 52, 53) is configured for receiving said measurement of the current (I(t); I(k)) and calculating the correction value (CD).

12. The apparatus according to any one of Claims 8 to 11, **characterized in that** said controller module (50) comprises a discrete-time integrator.

13. The apparatus according to any one of Claims 8 to 12, **characterized in that** said controller module (50) is associated to a PID network with feedback loop (51, 52, 53).

14. The apparatus according to any one of Claims 7 to 13, **characterized in that** said switches comprise MOSFETs (131).

**15.** The apparatus according to any one of Claims 7 to 14, **characterized in that** said controller module (50; 50, 51, 52, 53) comprises a driver-transformer gate (30) for generating said driving signals (Va, Vb, Vc, Vd).

**Patentansprüche**

**1.** Verfahren zur Wandlung von Gleichstrom mit Phasenmodulation und Nullspannungsschaltung, das vorsieht, eine H-Brücke von Schaltern (12) mit einer Eingangsspannung (Vin) zu beaufschlagen, um die Eingangsspannung (Vin) zu einem Transformator (14) zu übertragen, wobei der Transformator (14) über eine eigene Primärwicklung (15) mit einer Resonanzinduktivität (17) in Reihe geschaltet ist, wobei die Resonanzinduktivität (17) zwischen den Schaltern (13a und 13b) eines ersten Zweigs der Brücke (12) geschaltet ist, während die Primärwicklung (15) zwischen den Schaltern (13c, 13d) eines zweiten Zweigs der Brücke geschaltet ist, wobei die Schalter (13a, 13b) des ersten Zweigs oder die Schalter (13c, 13d) des zweiten Zweigs der Brücke (12) gemäß einer alternierenden Sequenz eingeschaltet und ausgeschaltet werden, wobei die Sequenz eine Totzeit (dt; dt1, dt2) aufweist, während der beide Schalter (13a, 13b) des ersten Zweigs oder die Schalter (13c, 13d) des zweiten Zweigs der Brücke (12) ausgeschaltet sind; wobei das Verfahren umfasst: eine Messung des Stromes (i(t)), der in dem Transformator (14) fließt, wird ausgeführt, eine Korrektur (CD) des Totzeitwerts (dt1; dt2), die dazu geeignet ist, eine Abweichung des magnetischen Flusses in dem Transformator (14) auszugleichen, welche hervorgerufen wird durch eine erste Diagonale (13a, 13d) der Brücke (12) in Bezug auf eine zweite Diagonale (13b, 13c) der Brücke (12), wird berechnet in Abhängigkeit von der Messung des Stromes (i(t)), die Korrektur (CD) des Totzeitwerts (dt1; dt2) wird angewandt, um die zu einem Zweig der Brücke (12) gehörigen Totzeiten (dt1) zwischen den beiden Übergängen von High zu Low (dt1) und von Low zu High (dt2) unterschiedlich zu machen.

**2.** Das Verfahren zur Wandlung nach Anspruch 1, **dadurch gekennzeichnet, dass**: die Operation des Berechnens einer Korrektur (CD) das Berechnen der Korrektur (CD) als Zeitintegral der Messung des Stroms (i(t)), der in dem Transformator (14) fließt, geteilt durch einen konstanten Wert (C), der zur Festlegung der Korrekturgeschwindigkeit geeignet ist, umfasst.

**3.** Das Verfahren zur Wandlung nach Anspruch 2, **dadurch gekennzeichnet, dass**: der konstante Wert (C) ausgelegt wird auf der Grundlage des Werts eines Kondensators, der in Reihe mit dem Transformator (14) geschaltet und dazu bemessen ist, die Abweichung des magnetischen Flusses in dem Transformator (14) auszugleichen, welche hervorgerufen wird durch eine erste Diagonale (13a, 13d) der Brücke (12) in Bezug auf eine zweite Diagonale (13b, 13c) der Brücke (12).

**4.** Das Verfahren zur Wandlung nach einem der vorstehenden Ansprüche, **dadurch gekennzeichnet, dass**: die Operation des Berechnens einer Korrektur (CD) das Anwenden der Korrektur (CD) auf eine Totzeit des Übergangs von High zu Low (dt1) und auf eine Totzeit des Übergangs von Low zu High (dt2) von Steuersignalen (Vab) umfasst, die an einen Zweig (Va, Vb) der Brücke (12) angelegt werden.

**5.** Das Verfahren zur Wandlung nach Anspruch 4, **dadurch gekennzeichnet, dass**: die Operation des Anwendens der Korrektur (CD) das Addieren der Korrektur (CD) zu der Totzeit des Übergangs von High zu Low (dt1) und das Subtrahieren der Korrektur von einer Totzeit des Übergangs von Low zu High (dt2) umfasst.

**6.** Das Verfahren zur Wandlung nach Anspruch 4, **dadurch gekennzeichnet, dass** es ein iteratives Wiederholen, insbesondere zu jedem nach jeder vollendeten Schaltperiode (T) der H-Brücke (12) inkrementierten diskreten Zeitpunkt (k), der Schritte des Ausführens einer Messung des Stromes (i(t)), der in dem Transformator (14) fließt, und des Berechnens einer Korrektur (CD) des Totzeitwerts (dt1; dt2) in Abhängigkeit von der Messung des Stromes (I(t)), umfasst.

**7.** Gleichstrom-Wandlervorrichtung mit Phasenmodulation und Nullspannungsschaltung, aufweisend eine H-Brücke von Schaltern (12) um eine Eingangsspannung (Vin) zu einem Transformator (14) zu übertragen, wobei der Transformator (14) über eine eigene Primärwicklung (15) mit einer Resonanzinduktivität (17) in Reihe geschaltet ist, wobei die Resonanzinduktivität (17) zwischen den Schaltern (13a und 13b) eines ersten Zweigs der Brücke (12) geschaltet ist, während die Primärwicklung (15) zwischen den Schaltern (13c, 13d) eines zweiten Zweigs der Brücke (12) geschaltet ist, wobei die Vorrichtung aufweist: ein Steuermodul (50; 50, 51, 52, 53), das dazu konfiguriert ist, den Ablauf des Verfahrens zur Wandlung nach einem oder mehreren der Ansprüche 1 bis 6 auszuführen.

**8.** Die Vorrichtung nach Anspruch 7, **dadurch gekennzeichnet, dass** sie ein Modul zur Messung des Stroms (31) in dem Transformator (14) aufweist.

9. Die Vorrichtung nach Anspruch 8, **dadurch gekennzeichnet, dass** das Modul zur Messung des Stroms einen Stromsensor (31) aufweist, der insbesondere in Reihe geschaltet ist zu der H-Brücke (12) oder zu dem Transformator (14).

10. Die Vorrichtung nach Anspruch 8 oder Anspruch 9, **dadurch gekennzeichnet, dass** der Stromsensor (31) zur Durchführung der Messung des Stroms (I(t)) durch das Abtasten von Stromwerten (I(1), I(2)) in der Mitte des Einschaltzeitintervalls des Signals (OV) konfiguriert ist, mit dem der Transformator (14) beaufschlagt wird.

11. Die Vorrichtung nach Anspruch 8 oder Anspruch 9 oder Anspruch 10, **dadurch gekennzeichnet, dass** das Steuermodul (50; 50, 51, 52, 53) zum Empfang der Messung des Stroms (I(t); I(k)) und Berechnung des Korrekturwerts (CD) ausgebildet ist.

12. Die Vorrichtung nach einem der Ansprüche 8 bis 11, **dadurch gekennzeichnet, dass** das Steuermodul (50) einen zeitdiskreten Integrator aufweist.

13. Die Vorrichtung nach einem der Ansprüche 8 bis 12, **dadurch gekennzeichnet, dass** das Steuermodul (50) mit einem PID-Netzwerk mit Rückkopplungsschleife (51, 52, 53) verbunden ist.

14. Die Vorrichtung nach einem der Ansprüche 7 bis 13, **dadurch gekennzeichnet, dass** die Schalter MOSFETs (131) aufweisen.

15. Die Vorrichtung nach einem der Ansprüche 7 bis 14, **dadurch gekennzeichnet, dass** das Steuermodul (50; 50, 51, 52, 53) ein Treiber-Transformator-Gatter (30) zum Erzeugen der Steuersignale (Va, Vb, Vc, Vd) aufweist.


**Revendications**

1. Procédé pour la conversion CC-CC avec une modulation par déplacement de phase et une commutation au zéro de tension, lequel envisage la fourniture d'une tension d'entrée (Vin) à un pont en H d'interrupteurs (12) pour transférer ladite tension d'entrée (Vin) à un transformateur (14), ledit transformateur (14) étant connecté en série à une inductance de résonance (17) via un enroulement primaire (15) propre, ladite inductance de résonance (17) étant connectée entre les interrupteurs (13a, 13b) d'une première branche du pont (12) tandis que ledit enroulement primaire (15) est connecté entre les interrupteurs (13c, 13d) d'une deuxième branche du pont, les interrupteurs (13a, 13b) de ladite première branche ou les interrupteurs (13c, 13d) de ladite deuxième branche du pont (12) étant mis en marche et arrêt en fonction d'une séquence alternée, ladite séquence comprenant un temps mort (dt ; dt1, dt2) pendant lequel les deux interrupteurs (13a, 13b) de ladite première branche ou les interrupteurs (13c, 13d) de ladite deuxième branche du pont (12) sont mis à l'arrêt ;
ledit procédé comprenant :

la réalisation d'une mesure du courant (i(t)) qui circule dans le transformateur (14),
une correction (CD) de la valeur de temps mort (dt1 ; dt2) étant calculée en tant que fonction de ladite mesure du courant (i(t)) convenant pour compenser une différence de flux magnétique dans le transformateur (14) générée par une première diagonale (13a, 13d) du pont (12) par rapport à une deuxième diagonale (13b, 13c) du pont (12),
ladite correction (CD) de la valeur de temps mort (dt1 ; dt2) étant appliquée pour rendre les temps morts (dt1) associés à une branche du pont (12) différents dans les deux transitions de haut vers bas (dt1) et de bas vers haut (dt2).

2. Procédé de conversion selon la revendication 1, **caractérisé en ce que** :

ladite opération de calcul d'une correction (CD) comprend le calcul de ladite correction (CD) en tant qu'intégrale de temps de la mesure du courant (i(t)) qui circule dans le transformateur (14) divisée par une valeur constante (C) convenant pour déterminer la vitesse de correction.

3. Procédé de conversion selon la revendication 2, **caractérisé en ce que** :

ladite valeur constante (C) est dimensionnée sur la base de la valeur d'un condensateur lequel, mis en série par rapport au transformateur (14), est conçu pour compenser ladite différence de flux magnétique dans le transformateur (14) générée par une première diagonale (13a, 13d) du pont (12) par rapport à une deuxième diagonale (13b, 13c) du pont (12).

4. Procédé de conversion selon l'une quelconque des revendications précédentes, **caractérisé en ce que** :

ladite opération de calcul d'une correction (CD) comprend l'application de ladite correction (CD) à un temps mort de la transition de haut vers bas (dt1) et à un temps mort de la transition de bas vers haut (dt2) de signaux de commande (Vab) appliqués à une branche (Va, Vb) du pont (12).

5. Procédé de conversion selon la revendication 4, **caractérisé en ce que** ladite opération d'application de ladite correction (CD) comprend l'addition de la correction (CD) audit temps mort de la transition de haut vers bas (dt1) et la soustraction de ladite correction d'un temps mort de la transition de bas vers haut (dt2).

6. Procédé de conversion selon la revendication 4, **caractérisé en ce qu'**il comprend la répétition itérative, en particulier à chaque instant discret (k) incrémenté après chaque période de commutation complète (T) du pont en H (12), desdites étapes de réalisation d'une mesure du courant (i(t)) qui circule dans le transformateur (14) et de calcul d'une correction (CD) de la valeur de temps mort (dt1 ; dt2) en tant que fonction de ladite mesure du courant (I(t)).

7. Appareil de conversion CC-CC avec une modulation par déplacement de phase et une commutation au zéro de tension, comprenant un pont en H (12) d'interrupteurs (13) pour transférer une tension d'entrée (Vin) à un transformateur (14), ledit transformateur (14) étant connecté en série à une inductance de résonance (17) via un enroulement primaire (15) propre, ladite inductance de résonance (17) étant connectée entre les interrupteurs (13a, 13b) d'une première branche du pont (12) tandis que ledit enroulement primaire (15) est connecté entre les interrupteurs (13c, 13d) d'une deuxième branche du pont (12), ledit appareil comprenant un module de contrôleur (50 ; 50, 51, 52, 53) configuré pour implémenter les opérations du procédé de conversion selon l'une ou plusieurs des revendications 1 à 6.

8. Appareil selon la revendication 7, **caractérisé en ce qu'**il comprend un module pour mesurer le courant (31) dans le transformateur (14).

9. Appareil selon la revendication 8, **caractérisé en ce que** ledit module pour mesurer le courant comprend un détecteur de courant (31), en particulier mis en série par rapport au pont en H (12) ou au transformateur (14).

10. Appareil selon la revendication 8 ou la revendication 9, **caractérisé en ce que** ledit détecteur de courant (31) est configuré pour effectuer la mesure du courant (I(t)) par échantillonnage de valeurs de courant (I(1), I(2)) à mi-parcours de la période de mise en marche du signal (OV) appliqué au transformateur (14).

11. Appareil selon la revendication 8 ou la revendication 9 ou la revendication 10, **caractérisé en ce que** ledit module de contrôleur (50 ; 50, 51, 52, 53) est configuré pour recevoir ladite mesure du courant (I(t) ; I(k)) et calculer la valeur de correction (CD).

12. Appareil selon l'une quelconque des revendications 8 à 11, **caractérisé en ce que** ledit module de contrôleur (50) comprend un intégrateur en temps discret.

13. Appareil selon l'une quelconque des revendications 8 à 12, **caractérisé en ce que** ledit module de contrôleur (50) est associé à un réseau PID avec une boucle de rétroaction (51, 52, 53).

14. Appareil selon l'une quelconque des revendications 7 à 13, **caractérisé en ce que** lesdits interrupteurs comprennent des MOSFETs (131).

15. Appareil selon l'une quelconque des revendications 7 à 14, **caractérisé en ce que** ledit module de contrôleur (50 ; 50, 51, 52, 53) comprend une porte transformateur-commande (30) pour générer lesdits signaux de commande (Va, Vb, Vc, Vd).

Fig. 1

Fig. 2

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6937486 A

- US 20100020569 A1

### Non-patent literature cited in the description

- A new resonant active clamping technique for bi-directional converters in HEVs. **CACCIATO, M. ; CONSOLI, A. ; CRISAFULLI, V. ; VITALE, G. ; ABBATE, N.** Energy Conversion Congress and Exposition (ECCE). 2010 IEEE, 12 September 2010, 1436-1441